Europäisches Patentamt

European Patent Office

Office européen des brevets

(11) Veröffentlichungsnummer: **0 307 818**
**A2**

## (12) EUROPÄISCHE PATENTANMELDUNG

(21) Anmeldenummer: 88114759.9

(22) Anmeldetag: 09.09.88

(51) Int. Cl.⁴: **C08L 53/02 , C08L 25/14**

(30) Priorität: 15.09.87 DE 3730886

(43) Veröffentlichungstag der Anmeldung:
22.03.89 Patentblatt 89/12

(84) Benannte Vertragsstaaten:
**BE DE FR GB NL**

(71) Anmelder: BASF Aktiengesellschaft
Carl-Bosch-Strasse 38
D-6700 Ludwigshafen(DE)

(72) Erfinder: Walter, Hans-Michael, Dr.
Im Haagweg 6
D-6701 Ruppertsberg(DE)
Erfinder: Schwaben, Hans-Dieter, Dr.
Lindenstrasse 6a
D-6721 Freisbach(DE)
Erfinder: Bueschl, Rainer, Dr.
Hollandstrasse 14
D-6701 Roedersheim-Gronau(DE)
Erfinder: Bronstert, Klaus, Dr.
Gartenstrasse 26
D-6719 Carlsberg(DE)
Erfinder: Echte, Adolf, Dr.
Leuschnerstrasse 42
D-6700 Ludwigshafen(DE)

(54) Transparente, schlagfeste thermoplastische Formmasse, Verfahren zur Herstellung derselben und ihre Verwendung.

(57) Die Erfindung betrifft eine transparente, schlagfeste, thermoplastische Formmasse, enthaltend, bezogen auf A + B,

A

5 bis 95 Gew.% eines durch anionische Polymerisation hergestellten Blockcopolymerisates, aus
40 bis 95 Gew.% Styrol und
60 bis 5 Gew.% Butadien
und wobei das Blockcopolymerisat ausgewählt ist aus der Gruppe der linearen Blockcopolymerisate, der verzweigten Blockcopolymerisate oder deren Mischungen,

und

B

95 bis 5 Gew.% mindestens eines weiteren, Styrol enthaltenden Copolymerisats.

    Charakteristisch ist, daß ein Copolymerisat B verwendet wird, das

97 bis 55 Gew.% Styrol und

3 bis 45 Gew.% Methylmethacrylat

in statistischer Verteilung einpolymerisiert enthält.

    Die Formmasse wird zur Herstellung von Formteilen verwendet.

## Transparente, schlagfeste thermoplastische Formmasse, Verfahren zur Herstellung derselben und ihre Verwendung

Die Erfindung betrifft eine transparente schlagfeste, thermoplastische Formmasse, enthaltend, bezogen auf A + B,

A

5 bis 95 Gew.% eines durch anionische Polymerisation hergestellten Blockcopolymerisates, das aufgebaut ist, bezogen auf A, aus

40 bis 95 Gew.% Styrol und
60 bis 5 Gew.% Butadien
und wobei das Blockcopolymerisat ausgewählt ist aus der Gruppe der linearen Blockcopolymerisate, der verzweigten Blockcopolymerisate und deren Mischungen,

und

B

95 bis 5 Gew.% mindestens eines weiteren, Styrol enthaltenden Copolymerisats.

Zum Stand der Technik werden genannt
(1) DE-OS 19 59 922
(2) DE-OS 25 50 227 und
(3) DE-PS 26 10 068.

(1) und (2) beschreiben transparente, sternförmig verzweigte Styrol-Dien-Block-Copolymerisate und deren Herstellung. In (3) werden Mischungen aus den in (1) und (2) beanspruchten Blockcopolymerisaten und Polystyrol beschrieben.

Die aus (3) bekannten Mischungen besitzen den Nachteil, daß der Mischungsbereich und der Dien-Gehalt der Block-Copolymerisate und damit die Kontrolle der mechanischen Eigenschaften durch die gleichzeitigen Anforderungen an die Transparenz stark eingeschränkt werden. Die Komponenten dieser Mischungen sind nur begrenzt verträglich und deshalb je nach Zusammensetzung mehr oder weniger zweiphasig und damit trübe.

Es ist ferner bekannt, daß Trübungen in unverträglichen Stoffgemischen durch die Angleichung der Brechungsindices von Komponenten einer Mischung vermieden werden können.

Als das bekannteste System hierfür gilt PVC, das mit den üblichen Schlagzähmodifieren auf Basis von ABS trübe, nicht transparente Mischungen ergibt. Wählt man jedoch MBS oder AMBS als Pfropfmischpolymerisat, so können transparente Abmischungen mit PVC erzielt werden.

Es bestand die Aufgabe, die Nachteile der aus (3) bekannten Mischung zu beheben, d.h. insbesondere die mechanischen Eigenschaften bei guter Transparenz zu verbessern. Diese Aufgabe wird dadurch gelöst, daß in den bekannten Mischungen aus Blockcopolymerisat und Polystyrol anstelle von Polystyrol ein Copolymerisat verwendet wird, das
97 bis 55 Gew.% Styrol und
3 bis 45 Gew.% Methylmethacrylat
in statistischer Verteilung einpolymerisiert enthält.

Die Erfindung betrifft eine transparente, schlagfeste, thermoplastische Formmasse, enthaltend, bezogen auf A + B,

A

5 bis 95 Gew.% mindestens eines durch anionische Polymerisation hergestellten Blockcopolymerisates, das aufgebaut ist, bezogen auf A, aus

40 bis 95 Gew.% Styrol und
60 bis 5 Gew.% Butadien
und wobei das Blockcopolymerisat ausgewählt ist aus der Gruppe der linearen Blockcopolymerisate, der verzweigten Blockcopolymerisate oder deren Mischungen,

B

95 bis 5 Gew.% mindestens eines weiteren, Styrol enthaltenden Copolymerisats,

dadurch gekennzeichnet, daß als weiteres, Styrol enthaltendes Copolymerisat ein solches verwendet wird, das
97 bis 55 Gew.% Styrol und
3 bis 45 Gew.% Methylmethacrylat
in statistischer Verteilung einpolymerisiert enthält.

Die Vorteile der erfindungsgemäßen Formmasse bestehen darin, daß man über den Methylmethacrylat-Gehalt den Brechungsindex der Copolymerisate exakt dem des Styrol-Butadien-Copolymerisates anpassen kann.

Dadurch besitzen die erfindungsgemäßen Formmassen über einen wesentlich größeren Mischungsbereich ausgezeichnete Transparenz und zwar sowohl in bezug auf den Gehalt an Butadien im Styrol-Butadien-Blockcopolymerisat als auch in bezug auf dessen Gehalt in der Mischung. Man kann dadurch mischen MMA haltige Styrolpolymerisate mit 5 bis Gew.% Styrol-Butadien- Blockcopolymerisaten bei Butadiengehalten im Bereich von 5 bis 60 Gew.% und erhält in diesem breiten Bereich transparente Mischungen.

Zusätzlich zu diesen Vorteilen der besseren Transparenz und größeren Zusammensetzungsbreite der Mischungen weisen die erfindungsgemäßen Formmassen ferner überraschend bessere mechanische Eigenschaften auf als vergleichbare auf Basis von Polystyrol. Insbesondere liegen die Zähigkeitswerte bei vergleichbaren oder besseren Steifigkeiten höher.

Nachstehend werden der Aufbau der Formmasse aus den Komponenten, die Komponenten und deren Herstellung, sowie die Herstellung der Formmasse beschrieben.

Die Formmasse enthält, jeweils bezogen auf die Summe aus A + B,
A: 95 bis 5 Gew.%, vorzugsweise 20 bis 80 Gew.%
B: 5 bis 95 Gew.%, vorzugsweise 80 bis 20 Gew.%.

Vorzugsweise besteht die Formmasse aus den Komponenten A + B. Zusätzlich kann die Formmasse, insbesondere für bestimmte Anwendungen, bezogen auf 100 Gewichtsteile A + B, je 0,01 bis 50 Gewichtsteile, vorzugsweise 0,1 bis 30 Gewichtsteile üblicher Zusatzstoffe (Komponente C) enthalten.

Komponente A

Als Komponente A kommen ganz allgemein an sich bekannte, durch anionische Polymerisation mit lithiumorganischen Verbindungen in organischen Lösungsmitteln hergestellte Blockcopolymerisate in Betracht, die aus Styrol und Butadien aufgebaut sind. Ein (Teil)Ersatz von Butadien durch Isopren ist möglich. Die Blockcopolymerisate weisen in der Regel Styrolgehalte von 40 bis 95 Gew.%, vorzugsweise von 50 bis 80 Gew.% und insbesondere von 60 bis 80 Gew.% auf (Rest Butadien und/oder Isopren) bei Viskositätszahlen, VZ, von 50 bis 130 [ml/g], vorzugsweise von 65 bis 96 [ml/g] und insbesondere von 70 bis 90 [ml/g] (gemessen 0,5 %ig in Toluol bei 23° C).

Als Blockcopolymerisate kommen solche aus der Gruppe der linearen Blockcopolymerisate mit scharfen oder verschmierten Übergängen zwischen den Blöcken in Betracht, die gegebenenfalls auch unter Verwendung von üblichen bifunktionellen Kopplungsmitteln hergestellt sein können. Diese können 2 bis 10 Blöcke aufweisen. Die Herstellung derartiger Blockcopolymerisate ist an sich bekannt und z.B. in der US-PS 3 149 182, der EP-PS 00 58 952 und EP-PS 0 153 727 beschrieben.

Als weitere Gruppe von Blockcopolymerisaten kommen die verzweigten Blockcopolymerisate in Be-

4

tracht, die in an sich bekannter Weise aus den linearen Blockcopolymerisaten, insbesondere dem "living anion" durch Kopplung mit multifunktionellen Kopplungsmitteln erzeugt werden, wobei je nach der Funktionalität des Kopplungsmittels 3 bis 12 Sternäste entstehen. Art und Umfang der Kopplung können mittels GPC-Analyse (Molgewichtsbestimmung), gegebenenfalls unter Abbau, ermittelt werden.

Verzweigte Sternblockcopolymerisate und deren Herstellung sind z.B. in der US-PS 3 281 383 bzw. der GB-PS 985 614 beschrieben. Polymodal aufgebaute verzweigte Blockcopolymerisate sind aus der DE-OS 19 59 922 bekannt. Schließlich sind andersartige verzweigte Blockcopolymerisate in der DE-OS 25 50 227 beschrieben. Die Kopplungsreaktion zur Herstellung verzweigter Blockcopolymerisate verläuft nicht quantitativ, so daß die verzweigten Blockcopolymerisate aus komplexen Mischungen linearer und verzweigter Blockcopolymerisate bestehen können. Im Sinne der vorliegenden Erfindung sollen jedoch die Umsetzungsprodukte der Kopplung inklusive der ungekoppelten Anteile als verzweigte Blockcopolymerisate verstanden werden. Bevorzugt werden verzweigte Blockcopolymerisate angewendet, die nach der Lehre der DE-OS 19 59 922 und insbesondere nach der Lehre der DE-OS 25 50 227 (mit verschmierten Übergängen zwischen den Blöcken) hergestellt worden sind.

Schließlich können auch Mischungen von Blockcopolymerisaten aus der zunächst beschriebenen ersten Gruppe der linearen und der zweiten Gruppe der verzweigten Blockcopolymerisate in Betracht kommen. Besonders bevorzugt werden die sternförmigen verzweigten polymodal aufgebauten Blockcopolymerisate.

Komponente B

Die Komponente B ist ein an sich bekanntes statistisch aufgebautes Styrol-Methylmethacrylatcopolymerisat, das 97 bis 55 Gew.% Styrol und 3 bis 45 Gew.% MMA einpolymerisiert enthält. Um den Vicat-Wert derartiger Copolymerisate und auch den der Mischungen aus A + B zu erhöhen, kann das Styrol ganz oder teilweise durch α-Methylstyrol oder p-Methylstyrol oder MSA ersetzt werden. Die VZ derartiger Copolymerisate (inklusive der Terpolymerisate) liegt im Bereich von 60 bis 120 [ml/g], insbesondere im Bereich von 70 bis 110 [ml/g]. Die bevorzugt angewendeten statistischen Styrol-Methylmethacrylat-Copolymeren werden radikalisch, kontinuierlich (vgl. DE-PS 10 91 329) oder diskontinuierlich z.B. durch ein Masse-Suspensions-Verfahren, hergestellt (vgl. Beispiele).

Komponente C

Die erfindungsgemäßen Formmassen können als weitere Komponente C Zusatzstoffe enthalten, wie sie für derartige Polymerisate üblich sind. Als solche seien beispielsweise genannt: Füllstoffe, weitere verträgliche Kunststoffe, Antistatika, Farbstoffe, Antioxidantien, Flammschutzmittel und Schmiermittel. Die Zusatzstoffe werden in üblichen Mengen eingesetzt.

Herstellung der Formmasse

Die Formmasse wird erhalten, vorzugsweise durch Abmischen von A mit B und gegebenenfalls mit C, in einem Arbeitsgang.

Das Abmischen der Komponenten A, B und gegebenenfalls C kann nach allen bekannten Methoden erfolgen. Es ist z.B. möglich, die Polymer-Lösungen miteinander zu vermischen, darauf die Polymerisate gemeinsam auszufällen und das Polymerisat-Gemisch aufzuarbeiten. Vorzugsweise geschieht jedoch das Abmischen der Komponente A + B und gegebenenfalls C durch gemeinsames Extrudieren, Kneten oder Verwalzen der Komponenten in der Schmelze.

Die erfindungsgemäße Formmasse wird nach den üblichen, für die Verarbeitung von Thermoplasten bekannten Verfahren z.B. Spritzguß oder Tiefziehen zu Fertigteilen verarbeitet. Sie finden insbesondere Verwendung für Gehäuse von Elektrogeräten, Haushaltsgeräten, Telefonen, für Platten, Rohre, Folien, Kinderspielzeug.

Die in der vorliegenden Anmeldung beschriebenen Parameter wurden wie folgt bestimmt:

1. Die Kerbschlagzähigkeit, $a_K$, in [kJ/m$_2$] der an Proben der Produkte wurde nach DIN 53 453 an bei 230°C gespritzten Normkleinstäben bei 23°C gemessen.

2. Die Viskositätszahl der Komponenten A + B wurde analog DIN 53 726 in einer Lösung, die 0,5 g Polymerisat in 100 cm$^3$ Toluol enthielt bei 23°C bestimmt.

3. Der E-Modul wird nach DIN 53 457 bestimmt.

4. Vicat-Erweichungstemperatur [°C] gemäß DIN 53 460, Methode B.
5. Reißfestigkeit, RF, in [N/mm²] und Reißdehnung, RD, in [%] nach DIN 53 455.
6. Brechungsindex, $n_D$, nach DIN 53 491, gemessen bei 20°C.

Für die Herstellung erfindungsgemäßer Formmassen und von Formmassen für Vergleichsversuche wurden die nachfolgend beschriebenen Produkte verwendet.

Komponente A

$A_1$

Es wurde ein sternförmiges, polymodal aufgebautes Styrol-Butadien-Blockcopolymerisat verwendet (Handelsprodukt der BASF; Styrolux® 684 D, mit ca. 22 Gew.% Butadien und einem Brechungsindex $n_D$ von 1,57 bei 20°C, bei einer VZ von 82 ml/g).

$A_2$

Die Herstellung eines weiteren unsymmetrischen, sternförmig verzweigten Styrol-Butadien-Blockcopolymerisats mit 20 Gew.% Butadien ist nachfolgend beschrieben: Die Polymerisation wurde unter Inertgasatmosphäre in einem Rührkessel mit Cyclohexan als Lösungsmittel durchgeführt. Zunächst wurden 48,3 Gew.% der gesamten Styrolmenge (8,5 l) mit 16 Gew.% der gesamten Butyllithiummenge (0,044 l 1,45 N) in 30 min bei 65°C auspolymerisiert. Nach Zugabe der restlichen Butyllithiummenge (0,232 l 1,45 N) wurden 39,8 Gew.% der gesamten Styrolmenge (7,0 l) in 25 min bei 60°C und anschließend eine Mischung aus 6,2 l Butadien und dem restlichen Styrol (2,1 l) unter Erhöhung der Temperatur auf 78°C auspolymerisiert. Die Kopplung zum sternförmigen Blockcopolymer wurde mit 59,1 g eines epoxidierten Leinsamenöls (Edenol® B 316 Fa. Henkel) bei 78°C in 20 min durchgeführt. Der Feststoffgehalt lag am Ende der Polymerisation bei ca. 25 Gew.%. Das Produkt wurde durch Zusatz von 0,3 Gew.% eines sterisch gehinderten Phenols als Antioxidans (Irganox® 1076 Fa. Ciba-Geigy) stabilisiert und durch Verdampfen des Lösungsmittels aufgearbeitet. Die Viskositätszahl lag bei 82,1 ml/g, der Brechungsindex, $n_D$, bei 1,576.

$A_3$

Es wurde nach dem unter $A_2$ beschriebenen Verfahren ein Blockcopolymerisat mit 40 Gew.% Butadien hergestellt. VZ = 80 [ml/g], $n_D$ = 1,562.

Komponente B

$B_1$

Es wurde ein Styrol-Methylmethacrylat-Copolymeres mit 15,6 Gew.% Methylmethacrylat hergestellt. Die Copolymerisation wurde in einem kontinuierlich durchflossenen Rührkessel bei einer Innentemperatur von 124°C, einem Feststoffgehalt von 46 Gew.% und einer mittleren Verweilzeit von 5,2 Stunden durchgeführt. Der Zulauf enthielt 83,1 Gew.% Styrol, 11,9 Gew.% Methylmethacrylat, 5,0 Gew.% Ethylbenzol und 0,01 Gew.% tert.-Butylperbenzoat. Das Copolymerisat wies eine Viskositätszahl von 75 ml/g und einen Brechungsindex $n_D$ = 1,575 auf.

$B_2$ + $B_3$

Es wurden 2 Styrol-Methylmethacrylat-Copolymere nach einem Masse-Suspensions-Verfahren hergestellt. Styrol (St) und Methylmethacrylat (MMA) wurden dazu unter Zusatz von tert.-Dodecylmercaptan (TDM) als Molekulargewichtsregler vorgelegt und unter Rühren bei T = 123°C bis zu Umsätzen von 40 bis 50 % in Masse polymerisiert. Anschließend wurden 0,1 Teile Dicumylperoxid, Wasser und Luviskol® K 90, Handelsprodukt der BASF Aktiengesellschaft, einem Suspendierhilfsmittel auf Basis von Polyethylenoxid zugegeben und in wäßriger Suspension 6 Stunden bei T = 130°C und 6 Stunden bei T = 140°C auspolymerisiert. Die in Perlenform erhaltenen Produkte wurden gewaschen, getrocknet und anschließend bei T = 250°C konfektioniert. Im einzelnen wurden folgende Produkte hergestellt:

|  | B$_2$ | B$_3$ |
|---|---|---|
| Sty (Gew.%) | 85,6 | 71,2 |
| MMA (Gew.%) | 14,4 | 28,7 |
| TDM (Gew.%) | 0,025 | 0,025 |
| n$_D$ | 1,576 | 1,564 |
| VZ (ml/g) | 86 | 84 |

B$_4$

Für Vergleichszwecke wurde ein Standardpolystyrol der VZ 74 ml/g (Handelsprodukt PSKR 2608 der BASF Aktiengesellschaft) verwendet.

B$_5$

Ebenfalls zum Vergleich diente ein Standardpolystyrol der VZ 96 (Handelsprodukt PS 158 K der BASF Aktiengesellschaft).

Komponente C

Durch die Komponenten A$_1$ bis A$_3$ wurde jeweils das Antioxidans, ein sterisch gehindertes Phenol eingebracht.

Die nachfolgenden Beispiele und Vergleichsversuche sollen die Erfindung näher erläutern. Die angegebenen Teile und Prozente beziehen sich auf das Gewicht.

Beispiele 1 bis 5 und Vergleichsversuche I bis V

In allen Beispielen und Vergleichsversuchen wurden die Komponenten A$_n$ (mit C) mit B$_n$ auf einem ZSK 30-Extruder der FA. Werner und Pfleiderer bei 220°C angemischt.

Beispiel 1 und Vergleichsversuch I

Es wurden je 50 Gewichtsteile A$_1$ mit B$_1$ (Beispiel 1) und je 50 Gewichtsteile A$_1$ mit B$_4$ - (Vergleichsversuch I) gemischt.

Die Ergebnisse der mechanischen Prüfung sind in der folgenden Tabelle 1 zusammengefaßt:

| Aussehen | Beispiel 1 transparent | Vergleichsversuch I trüb |
|---|---|---|
| E-Modul (N/mm$^2$) | 2477 | 2363 |
| Streckspannung (N/mm$^2$) | 45,3 | 42,0 |
| Reißdehnung (%) | 18,3 | 10,5 |
| Vicat B (°C) | 78,3 | 81,7 |
| Kerbschlagzähigkeit (kJ/m$^2$) | 6,5 | 5,6 |

7

EP 0 307 818 A2

Beispiele 2 bis 5 und Vergleichsversuche II bis V:

Die in der Tabelle 2 genannten Teile an $A_n$ und $B_n$ wurden, wie vorstehend beschrieben, gemischt. In die Tabelle sind auch die Ergebnisse der mechanischen Prüfung mit aufgenommen.

Tabelle 2

| Beispiel | 2 | | 3 | | 4 | | 5 | |
|---|---|---|---|---|---|---|---|---|
| Vergleichsversuch | - | II | - | III | - | IV | - | V |
| Komponente A: Art | $A_2$ | $A_2$ | $A_2$ | $A_2$ | $A_3$ | $A_3$ | $A_3$ | $A_3$ |
| Menge (%) | 25 | 25 | 75 | 75 | 25 | 25 | 50 | 50 |
| Komponente B: Art | $B_2$ | $B_5$ | $B_2$ | $B_5$ | $B_3$ | $B_5$ | $B_3$ | $B_5$ |
| Menge (%) | 75 | 75 | 25 | 25 | 75 | 75 | 50 | 50 |
| E-Modul | 2777 | 2775 | 1840 | 1687 | 2403 | 2385 | - | - |
| Vicat B | 90,0 | 93,8 | 68,5 | 64,7 | 79,4 | 85,2 | 48,8 | 53,0 |
| Reißfestigkeit | 42,8 | 40,2 | 22,7 | 20,8 | 32,1 | 29,1 | 20,4 | 18,4 |
| Reißdehnung | 5 | 2 | 16 | 8 | 38 | 30 | 71 | 71 |
| Kerbschlagzähigzähigkeit | 4,9 | 3,5 | 5,2 | 4,6 | 6,8 | 4,0 | 60,0 | 28,8 |

Alle erfindungsgemäßen Formmassen weisen bei erwartungsgemäß hohen Transparenzen bessere mechanische Eigenschaften als die Proben der Vergleichsversuche auf.

## Ansprüche

1. Transparente, schlagfeste, thermoplastische Formmasse, enthaltend, bezogen auf A + B,

A

5 bis 95 Gew.% mindestens eines durch anionische Polymerisation hergestellten Blockcopolymerisates, das aufgebaut ist, bezogen auf A, aus
40 bis 95 Gew.% Styrol und
60 bis 5 Gew.% Butadien
und wobei das Blockcopolymerisat ausgewählt ist aus der Gruppe der linearen Blockcopolymerisate, der verzweigten Blockcopolymerisate oder deren Mischungen,

B

95 bis 5 Gew.% mindestens eines weiteren, Styrol enthaltenden Copolymerisats,

dadurch gekennzeichnet, daß als weiteres, Styrol enthaltendes Copolymerisat ein solches verwendet wird, das
97 bis 55 Gew.% Styrol und
3 bis 45 Gew.% Methylmethacrylat
in statistischer Verteilung einpolymerisiert enthält.

2. Formmasse nach Anspruch 1, dadurch gekennzeichnet, daß diese übliche Zusatzstoffe (Komponente C) enthält.

3. Formmasse nach Ansprüchen 1 oder 2, dadurch gekennzeichnet, daß das Blockcopolymerisat A aus
50 bis 80 Gew.% Styrol und
50 bis 20 Gew.% Butadien
aufgebaut ist.

4. Formmasse nach Ansprüchen 1 oder 2, dadurch gekennzeichnet, daß das Blockcopolymerisat A verzweigt und polymodal aufgebaut ist aus
60 bis 80 Gew.% Styrol und
40 bis 20 Gew.% Butadien.

8

5. Formmasse nach Ansprüchen 1, 2, 3 oder 4, dadurch gekennzeichnet, daß das Blockcopolymerisat A aus der Gruppe der verzweigten Blockcopolymerisate mit 3 bis 12 Sternästen ausgewählt wird, wobei die einzelnen Sternäste Segmente mit scharfen und/oder sogenannten verschmierten Übergängen zwischen den Styrol- und Butadienblöcken aufweisen.

6. Verfahren zur Herstellung der Formmassen gemäß Ansprüchen 1 bis 5 durch übliches Mischen der Komponenten A mit B und gegebenenfalls C.

7. Verwendung von Formmassen gemäß Ansprüchen 1 bis 5 zur Herstellung von Formteilen.

8. Formteile aus Formmassen gemäß Ansprüchen 1 bis 5.